# EUROPEAN PATENT SPECIFICATION

(11) **EP 2 465 833 B1**
(45) Date of publication and mention of the grant of the patent: **18.10.2017**
(21) Application number: 10808245.4
(22) Date of filing: 11.08.2010
(51) Int. Cl.: C03C 27/12

(54) **LAMINATED GLASS FOR USE IN VEHICLES**
LAMINIERTES GLAS ZUR VERWENDUNG IN FAHRZEUGEN
VERRE FEUILLETÉ À UTILISER DANS DES VÉHICULES

(30) Priority: 12.08.2009 JP 2009187518
(43) Date of publication of application: 20.06.2012
(73) Proprietor: Asahi Glass Company, Limited, Tokyo 100-8405 (JP)
(72) Inventor: MASAKI, Yuji, Tokyo 100-8405 (JP)
(74) Representative: Müller-Boré & Partner Patentanwälte PartG mbB
(86) International application number: PCT/JP2010/063660
(87) International publication number: WO 2011/019062

(56) References cited:
- EP-A1- 1 331 089
- JP-A- 8 210 042
- JP-A- 2002 173 347
- JP-A- 2005 029 083
- US-B1- 6 495 261

## Description

The present invention relates to a laminated glass for vehicles having electromagnetic wave transmittance and excellent heat shielding property.

In recent years, a laminated glass for vehicles having a low infrared transmittance and an excellent heat shielding property has been developed. However, in a case where a heat reflecting film having a layer made of silver as a main component (hereinafter, simply referred to as "a heat reflecting film") is used to reduce the infrared transmittance for the laminated glass for vehicles, there were problems such as a poor transmittance of the electromagnetic wave having a frequency of from 300 MHz to 10 GHz to be used for e.g. keyless entry system, GPS, mobile phone or ETC.

On the other hand, a method of blending an infrared absorption material into an interlayer of the laminated glass, is available as another method for reducing the infrared transmittance in the laminated glass for vehicles. However, the laminated glass for vehicles having heat shielding property, which is prepared by means of such a method, was problematic from the viewpoint that troubles readily occur in e.g. a system employing infrared communication such as VICS using optical beacon or a sensor employing a near infrared ray if it is attempted to obtain good heat shielding property. Accordingly, a technique for solving such problems has been proposed in Patent Document 1. Patent Document 1 discloses a technique of a laminated glass, which is excellent in heat shielding property and with which various systems using infrared communication can be utilized, by providing the laminated glass with a first region and a second region differing in the infrared transmittance. Further, Patent Document 2 discloses a technique of providing the laminated glass for vehicles with a first region and a second region differing in the near infrared transmittance and visible light transmittance, and also discloses that a colorant hardly shielding a wavelength of near infrared ray, is used as a colorant contained in an interlayer to be used for a shade band portion provided in a band shape at the upper edge of the laminated glass, so as to secure the near infrared transmittance while achieving function of antiglare properties in the shade band portion, whereby it is possible to install an optical device in which near infrared ray is used without replacing the interlayer of the laminated glass.

### PRIOR ART DOCUMENTS

### PATENT DOCUMENTS

Patent Document 1: JP-A-2002-173347
Patent Document 2: WO2007/04976

It is an object of the present invention to provide a laminated glass for vehicles employing a heat reflecting material, having excellent heat shielding property, safety, durability and economic efficiency, and also having electromagnetic wave transmittance which makes it possible to install various communication equipments employing electromagnetic waves.
The subject matter of the present invention is characterized in the claims.

The laminated glass for vehicles of the present invention is a laminated glass for vehicles comprising at least two glass sheets, and an interlayer and a heat reflecting film having a layer made of silver as a main component, provided between the two glass sheets, which are laminated, wherein
the interlayer is provided over the entire surface of the laminated glass, and has a band-shape colored portion along the upper edge portion of the laminated glass, and
the heat reflecting film is positioned so that an upper end thereof is located on the upper side than the vicinity of a lower end of the colored portion of the interlayer and on the lower side by at least 50 mm than the upper edge of the laminated glass, and said heat reflecting film is provided over substantially the entire surface of the laminated glass except a part or all of the upper edge portion of the laminated glass.

The laminated glass for vehicles of the present invention has excellent heat shielding property over the entire surface since the colored portion of the interlayer and the portion having a heat reflecting film disposed are present over the entire surface substantially without gaps, has safety since a boundary for disposing the heat reflecting film is not noticeable, and further has durability and economic efficiency since the portion having a heat reflecting film disposed is not substantially present in the upper edge portion of the laminated glass, and further has electromagnetic wave transmittance in this upper edge portion.

### BRIEF DESCRIPTION OF DRAWINGS

Fig. 1 is a front view illustrating one embodiment of the laminated glass for vehicles of the present invention.
Fig. 2 is a cross-sectional view illustrating a portion corresponding to line A-A' in Fig. 1 of the embodiment of the laminated glass for vehicles of the present invention shown in Fig. 1.
Fig. 3 is a cross-sectional view illustrating another embodiment of the laminated glass for vehicles of the present invention.
Fig. 4 is a front view illustrating further another embodiment of the laminated glass for vehicles of the present invention.
Fig. 5 is a cross-sectional view illustrating a portion corresponding to line B-B' in Fig. 4 of the embodiment of the laminated glass for vehicles of the present invention shown in Fig. 4.
Fig. 6 is a graph showing optical properties of the laminated glass for vehicles obtained in Example 1.
Fig. 7 is a graph showing optical properties of the laminated glass for vehicles obtained in Example 2.
Fig. 8 is a graph showing optical properties of the laminated glass for vehicles obtained in Example 3.

The laminated glass for vehicles of the present invention is a laminated glass for vehicles comprising at least two glass sheets, and an interlayer and a heat reflecting film having a layer made of silver as a main component, provided between the two glass sheets, which are laminated, wherein
the interlayer is provided over the entire surface of the laminated glass, and has a band-shape colored portion along the upper edge portion of the laminated glass, and
the heat reflecting film is positioned so that an upper end thereof is located on the upper side than the vicinity of a lower end of the colored portion of the interlayer and on the lower side by at least 50 mm than the upper edge of the laminated glass, and said heat reflecting film is provided over substantially the entire surface of the laminated glass except a part or all of the upper edge portion of the laminated glass.

Further, in this specification, "upper edge" and "lower edge" respectively mean edges on the upper side and on the lower side when the laminated glass for vehicles is mounted in a vehicle, and side edges mean the other two edges. More particularly, in a windshield window glass for automobiles, in a state where the laminated glass is fitted in an opening portion of a windshield window, an edge corresponding to an upper edge of the opening portion of the windshield window is referred to as an upper edge, and an edge corresponding to a lower edge of the opening portion of the windshield window is referred to as a lower edge. Further, "an upper edge portion" means a region in the vicinity of the upper edge of a laminated glass, and "a lower edge portion" means a region in the vicinity of the lower edge of a laminated glass, respectively.

In the laminated glass for vehicles of the present invention, the interlayer having a band-shape colored portion along the upper edge portion is provided over the entire surface of the laminated glass, and the heat reflecting film is positioned so that an upper end thereof is located on the upper side than the vicinity of a lower end of the colored portion of the interlayer and on the lower side by at least 50 mm than the upper edge of the laminated glass, and said heat reflecting film is provided over substantially the entire surface of the laminated glass except a part or all of the upper edge portion of the laminated glass. By such a construction, the laminated glass for vehicles of the present invention has electromagnetic wave transmittance, and also has the solar transmittance suppressed to be at a low level over the entire surface and thereby has excellent heat shielding property.

Here, with respect to the solar transmittance of the laminated glass for vehicles of the present invention, specifically, the solar transmittance (Te) determined in accordance with JIS R3106 (1998) is preferably at most 50%, more preferably at most 45%, particularly preferably at most 40%, in a colored region corresponding to the colored portion of the interlayer and in a heat reflecting region provided with the heat reflecting film in the laminated glass.

Further, in a case where the solar transmittance of the laminated glass for vehicles of the present invention is measured in accordance with another index, the solar transmittance (Tts) determined in accordance with ISO 13837 (2008) is at most 60%, more preferably at most 55%, particularly preferably at most 50%, in the colored region corresponding to the colored portion of the interlayer and in the heat reflecting region provided with the heat reflecting film in the laminated glass.

When the solar transmittance is within the above range in a colored region corresponding to the colored portion of the interlayer and in a heat reflecting region provided with the heat reflecting film in the laminated glass for vehicles of the present invention, it can be said that the laminated glass has sufficient heat shielding property.

Further, in the laminated glass for vehicles of the present invention, the heat reflecting film is positioned so that an upper end thereof is located on the upper side than the vicinity of a lower end of the colored portion of the interlayer and on the lower side by at least 50 mm than the upper edge of the laminated glass, and said heat reflecting film is provided over substantially the entire surface of the laminated glass except a part or all of the upper edge portion of the laminated glass. By such a construction, the laminated glass for vehicles of the present invention has transparency to electromagnetic wave used in e.g. various communication equipments, at the upper edge portion where a heat reflection film is not at all or partly provided.

In the laminated glass for vehicles of the present invention, the region provided with the heat reflecting film other than the upper edge portion of the laminated glass will be referred to as a heat reflecting region. Further, the region of the upper edge portion in the laminated glass, where the heat reflection film is not at all or partly provided, is referred to as a non-heat reflecting region.

In the laminated glass for vehicles of the present invention, the heat reflecting film is constructed so as to be not at all present or partly disposed in the upper edge portion of the laminated glass. That is, the heat reflecting film may partly be present in the upper edge portion of the laminated glass, as the case requires. If all the heat reflecting film in the upper edge portion (a portion substantially corresponding to the colored region) of the laminated glass is removed, distortion is likely to occur on the boundary portion between the portion where the heat reflecting film is present and the portion where the heat reflecting film is removed, but when the heat reflecting film is partly disposed in the upper edge portion of the laminated glass by cutting the film into a mesh-shape or a linear-shape, it is possible to suppress such distortion. In a case where the heat reflecting film is partly disposed in the upper edge portion of the laminated glass as such, a window for transmitting electromagnetic waves may be made, or it is preferred to form a frequency selective surface having the film removed into a plurality of lines or gratings arranged at certain intervals, on the heat reflecting film formed on the glass surface, whereby it is possible to secure good electromagnetic wave transmittance.

In the laminated glass for vehicles of the present invention, with respect to a portion other than the upper edge portion of the laminated glass, the heat reflecting film is provided over substantially the entire surface to secure heat shielding property. At the portion other than the upper edge portion of the laminated glass, the heat reflecting film is preferably provided over the entire surface from the viewpoint of the heat shielding property. However, within a range where the sufficient heat shielding property over the entire laminated glass can be secured, specifically, a range where the heat shielding property evaluated by e.g. the solar transmittance can be secured, it is also possible to dispose a portion having part of the heat reflecting film removed or processed into a mesh-shape, at the lower edge portion of the laminated glass, in order to improve the electromagnetic wave transmittance. Accordingly, "substantially the entire surface" means the entire surface which may partly be removed within the above range.

Here, in the case of a heat reflecting film of which the upper end is not linear, such as a concave-shape heat reflecting film, the upper end of the heat reflecting film means a line having no dent. However, in a case where the portion of the heat reflecting film, corresponding to the upper edge portion of the laminated glass, is processed into a mesh-shape or a case where the frequency selective surface is formed thereon, the upper end of the portion excluding the portion processed into a mesh-shape or the portion having a frequency selective surface formed thereon, is regarded as an upper end of the heat reflecting film.

With respect to the electromagnetic wave transmittance of the laminated glass for vehicles of the present invention, specifically, the electromagnetic wave transmission loss of the electromagnetic wave having a frequency of from 300 MHz to 10 GHz is preferably at most 5 dB, more preferably at most 3 dB, in the above laminated glass. In order to achieve such electromagnetic wave transmittance, in the laminated glass for vehicles of the present invention, the heat reflecting film is positioned so that an upper end thereof is located on the lower side by at least 50 mm than the upper edge of the laminated glass. The heat reflecting film is positioned so that the upper end thereof is located on the lower side by preferably at least 100 mm, particularly preferably at least 150 mm than the upper edge of the laminated glass.

Here, the electromagnetic wave transmission loss is a difference between the intensity of a signal received by a receiver placed in the room of the vehicle through the laminated glass for vehicles of the present invention and the intensity of a signal in a case where a laminated glass for vehicles having the same constitution except that no heat reflecting film is provided thereon is disposed, when a signal of an electromagnetic wave having a frequency of from 300 MHz to 10 GHz is applied from the front of the vehicles.

Further, with respect to the electromagnetic waves having a frequency of from 300 MHz to 10 GHz which the laminated glass for vehicles of the present invention sufficiently transmits, an electromagnetic wave having a frequency of 300 MHz is used for e.g. keyless entry system or a garage opener, an electromagnetic wave having a frequency of 800 MHz to 2 GHz is used for e.g. a mobile phone or GPS, and an electromagnetic wave having a frequency of from 5 to 6 GHz is used for e.g. ETC, respectively, and they are in a frequency region with high availability.

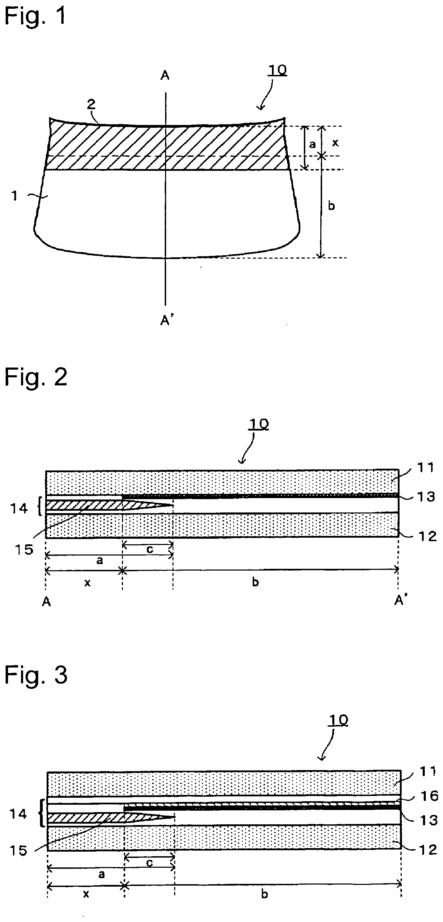

Now, the embodiment of the present invention will be described with reference to Figs. 1 to 5.

Fig. 1 is a front view illustrating one embodiment of a laminated glass for windshield windows for automobiles, as the laminated glass for vehicles of the present invention, and Fig. 2 is a cross-sectional view illustrating a portion corresponding to line A-A' in Fig. 1.

In the embodiment of the present invention of which a cross-sectional view is shown in Fig. 2, the laminated glass for vehicles 10 has two glass sheets 11 and 12, and a heat reflecting film 13 and an interlayer 14 with a band-shape colored portion 15 at the upper edge portion are laminated between the two glass sheets 11 and 12. In this embodiment, the interlayer 14 is provided over the entire surface between the two glass sheets 11 and 12, and the heat reflecting film 13 is provided over the entire surface excluding the upper edge portion between the glass sheet 11 and the interlayer 14. Further, the heat reflecting film 13 is positioned so that an upper end thereof is located on the upper side than the lower end of the colored portion 15 of the interlayer 14, and at a portion from the upper end of the heat reflecting film 13 to the lower end of the colored portion 15 of the interlayer 14, that is at a portion having a width c shown in Figs. 1 and 2, the heat reflecting film 13 and the colored portion of the interlayer 14 overlap. The lower end of the heat reflecting film 13 agrees with the lower end of the laminated glass.

Here, in the laminated glass for vehicles of the present invention, the heat reflecting film is positioned so that an upper end thereof is located on the upper side than the vicinity of a lower end of the colored portion of the interlayer and on the lower side by at least 50 mm than the upper end of the laminated glass, in order that the end portion will not be noticeable.

In this embodiment, in order that the upper end of the heat reflecting film is not noticeable, the heat reflecting film 13 and the colored portion 15 of the interlayer 14 overlap at a width of c. The width c at the overlap portion, that is the length c from the upper end of the heat reflecting film 13 to the lower end of the colored portion 15 of the interlayer 14 is preferably at least 10 mm, more preferably at least 50 mm.

Further, in the present invention, the upper end of the heat reflecting film may be located on the lower side than the lower end of the colored portion of the interlayer so long as the boundary formed by presence and absence of the heat reflecting film is not noticeable. That is, the vicinity of the lower end of the colored portion includes the portion lower than the lower end of the colored portion. Specifically, it is preferred that the upper end of the heat reflecting film is located lower by at most 10 mm than the lower end of the colored portion of the interlayer, and it is more preferred that the upper end of the heat reflecting film is located lower by at most 5 mm than the lower end of the colored portion of the interlayer.

Further, in the laminated glass for vehicles of the present invention, the distance from the upper edge of the laminated glass to the upper end of the heat reflecting film is at least 50 mm to secure the electromagnetic wave transmittance as mentioned above, preferably at least 100 mm, particularly preferably at least 150 mm. Further, in this embodiment, the distance from the upper edge of the laminated glass to the upper end of the heat reflecting film is shown as x in Figs. 1 and 2.

In Figs. 1 and 2, the heat reflecting film 13 is provided over the entire surface except the upper edge portion with a width b. Further, as mentioned above, in the heat reflecting region, the solar transmittance (Te) determined in accordance with JIS R3106 (1998) is preferably at most 50%, more preferably at most 45%, particularly preferably at most 40%. Further, in the heat reflecting region, the solar transmittance (Tts) determined in accordance with ISO 13837 (2008) is preferably at most 60%, more preferably at most 55%, particularly preferably at most 50%.

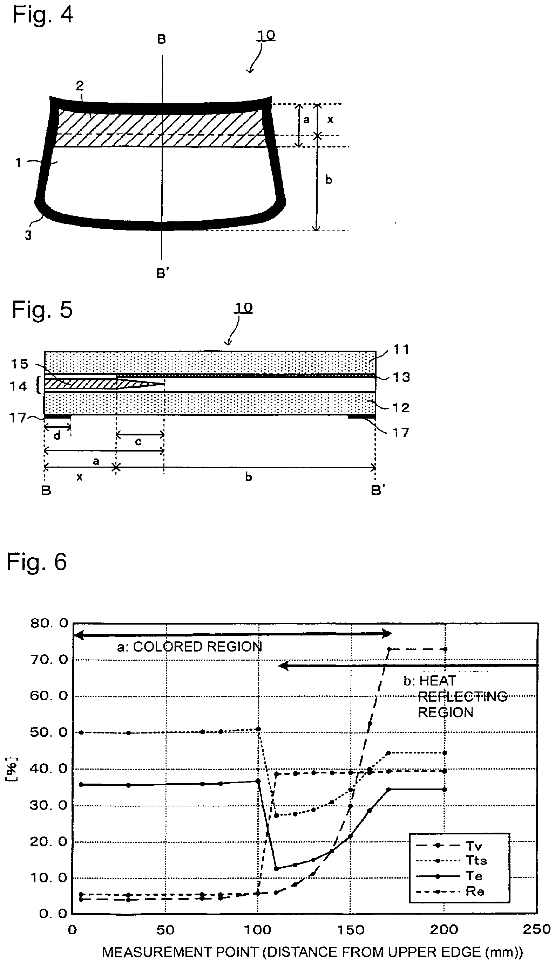

Here, in a region where the visibility is required in the laminated glass for vehicles, the visible light transmittance is preferably at least 70%. The region corresponding to the region where the visibility is required in the laminated glass for vehicles of the present invention is a region (hereinafter this region is sometimes referred to as a non-colored region; a region represented by 1 in Figs. 1 and 4) other than a colored region (a region represented by 2 in Figs. 1 and 4) corresponding to the colored portion of the interlayer, in the heat reflecting region.

The optical properties in the heat reflecting region and the non-colored region of the laminated glass for vehicles of the present invention, mainly depend upon the properties of the heat reflecting film, and the constitution to obtain such optical properties will be described below.

Here, the visible light transmittance used in this specification means a visible light transmittance (Tv) measured in accordance with JIS R3211 unless otherwise specified.

As a heat reflecting film, a heat reflecting film having a layer made of silver as a main component is used. Such a heat reflecting film may be specifically a multilayered heat reflecting film having a structure in which a layer made of silver as a main component (referred to also as a heat reflecting layer) is laminated so as to be sandwiched between dielectric layers. The number of the heat reflecting layer may be from 1 to 4, and is preferably from 2 to 3. The number of the dielectric layers is usually the number obtained by adding 1 to the number of the heat reflecting layer.

As the layer (heat reflecting layer) made of silver as a main component, it is possible to use a silver (Ag) metal layer or an alloy layer made of silver as a main component. The above heat reflecting layer is preferably a layer containing Ag as a main component, and containing e.g. Pd, Au or Cu as another metal component, in an amount of from 0.3 to 10 atomic% to the total amount of Ag and another metal component.

In the multilayered heat reflecting film, each of the dielectric layers sandwiching the heat reflecting layer is a layer made of a material containing e.g. a metal oxide, a nitride or an oxynitride as a main component. The above metal oxide is specifically a metal oxide such as Bi₂O₃, SnO₂, ZnO, Ta₂O₅ Nb₂O₅, WO₃ TiO₂, Al₂O₃, ZrO₂ or In₂O₃ or a mixture thereof, or for example, ZnO containing e.g. Sn, Al, Cr, Ti, Si, B, Mg, In or Ga or In₂O₃ containing Sn. The nitride is specifically a nitride of at least one element selected from Si, Al and B, or a mixture (including a composite nitride) of such a nitride with a nitride of either Zr or Ti.

The above material to be used for the dielectric layers of the multilayered heat reflecting film is selected to have a refractive index of from about 1.7 to 2.6, particularly from 1.8 to 2.6. Further, each dielectric layer in the multilayered heat reflecting film may be a single layer or a multilayer.

Among the dielectric layers made of the above various materials, preferred as a dielectric layer is an oxide layer of Zn or an oxide layer of Zn containing at least one element selected from Sn, Al, Cr, Ti, Si, B, Mg, In and Ga, with a view to stably forming the heat reflecting layer with high crystallinity. An oxide layer of Zn containing Al and/or Ti is particularly preferred.

The multilayered heat reflecting film to be used in the present invention basically has a structure wherein the above heat reflecting layer is laminated so as to be sandwiched between the dielectric layers, but as the case requires, it is also possible to provide a thin barrier layer on at least one side of the heat reflecting layer. Such a barrier layer is introduced into the dielectric layer as the barrier layer itself is oxidized while protecting the heat reflecting layer from contacting with oxygen, at the time of forming the dielectric layer. The barrier layer is specifically composed of a material selected from at least one of a metal such as Ti, Ta, Nb, Ni, Cr, Zn or Sn, a stainless steel alloy, and an Ni-Cr alloy, as a main component.

The thickness of each layer in the multilayered heat reflecting film to be used in the present invention depends upon the number or the type of the materials for the layers constituting the heat reflecting film, but in general, it is preferred that the thickness of the dielectric layer is from 5 to 100 nm, the thickness of the metal layer is from 5 to 20 nm, and the thickness of the barrier layer when the barrier layer is provided is from 0.1 to 3 nm, and further it is preferred that the entire thickness of the heat reflecting film is within a range of from 50 to 400 nm. It is more preferred that the entire thickness of the heat reflecting film is from 150 to 300 nm.

The heat reflecting film having such a laminated structure is provided on at least one of the above two glass sheets by means of any one of known techniques such as magnetron sputtering, electron-beam deposition, vacuum deposition and chemical deposition. The heat reflecting region and the non-heat reflecting region are controlled by masking the non-heat reflecting region of a substrate at the time of forming the heat reflecting film, or by forming the heat reflecting film on the entire surface of the substrate and then removing the heat reflecting film from a region to be regarded as a non-heat reflecting region. The method by the masking is preferred from the viewpoint of economic efficiency.

In the laminated glass for vehicles of the present invention, the heat reflecting film is provided on the surface of at least one of the glass sheets, located inside of the laminated glass. Or in a case where the interlayer is a multilayered interlayer containing a supporting film as laminated, the heat reflecting film is provided on the surface of the supporting film.

The heat reflecting film may be provided inside of the car-exterior side glass sheet of the laminated glass or inside of the car-interior side glass sheet of the laminated glass. With a view to effectively shielding heat, it is preferred to provide the heat reflecting film inside of the car-exterior side glass sheet of the laminated glass. The reason is that the colored portion (especially, a colored portion containing infrared shielding fine particles such as ITO) has characteristics of absorbing the heat, and by providing the heat reflecting film inside of the car-exterior side glass sheet of the laminated glass, it is possible to reduce the heat arriving at the colored portion and it is thereby possible to reduce the heat absorbed in the colored portion, and as a result, the heat shielding performance improves.

From the viewpoint that the end portion of the heat reflecting film seen from the car-exterior side would not be noticeable, it is preferred to provide the heat reflecting film inside of the car-interior side glass sheet of the laminated glass. Usually, the end portion of the heat reflecting film is easily noticeable when it is seen from the car-exterior side rather than the car-interior side. When the heat reflecting film is provided inside of the car-interior side glass sheet of the laminated glass, the end portion of the heat reflecting film is hidden behind the colored portion, and therefore the end portion of the heat reflecting film would not be noticeable when it is seen from the car-exterior side, such being preferred in view of the outer appearance.

In the embodiment of the laminated glass for vehicles of the present invention shown in Figs. 1 and 2, the heat reflecting film 13 is one formed at the above-mentioned position of the inner surface of the glass sheet 11.

Fig. 3 is a cross-sectional view illustrating another embodiment of the laminated glass for vehicles of the present invention. In this embodiment, a laminated glass for vehicles 10 has a construction wherein a heat reflecting film 13 is provided on the surface of a supporting film 16 disposed between layers of a multilayered interlayer 14. In this embodiment, as the heat reflecting film 13 to be used, a heat reflecting film having the same construction as the above may be mentioned.

The supporting film 16 is not particularly limited so long as it is possible to form the above heat reflecting film on the surface and it is made of a material which may not impair the effect of the present invention, and specifically, a plastic film such as polycarbonate, polymethyl methacrylate (PMMA), polyethylene terephthalate (PET), polyethylene naphthalate, polyimide, polyethersulfone, polyarylate, nylon or cycloolefin polymer may be mentioned.

Here, a plastic film prepared by an orientation method, such as a polyethylene terephthalate (PET) film, is preferred as a supporting film for the heat reflecting film, since it has a relatively high strength, it is possible to suppress defects such as film bending occurred e.g. by handling at the time of a lamination process with the interlayer, and further it is also possible to suppress formation of spherical crystals due to heating and thereby to suppress white turbidity. The thickness of the supporting film to be used is preferably within a range of from 5 to 200 µm, more preferably within a range of from 20 to 100 µm.

Further, as a heat reflecting film having the above-mentioned heat reflecting film formed on the surface of such a plastic film as a supporting film, commercial products may also be available and used in the present invention. Such a commercial product may specifically, be e.g. XIR-70 (trade name, manufactured by Southwall Technologies, Inc.) or REFTEL (registered trade mark) WHO3 (trade name, manufactured by Teijin DuPont Films).

The above supporting film having the heat reflecting film formed on the surface is used as inserted between layers of the interlayer comprising at least two layers as laminated/integrated at the time of preparing the interlayer as described below. Further, it is also possible to employ a method of directly forming a heat reflecting film on the surface of the glass sheet, by laminating a supporting film having the heat reflecting film formed on its surface, on the surface of the glass sheet constituting the laminated glass for vehicles of the present invention.

In the laminated glass for vehicles in each of the embodiments shown in Figs. 1 and 2 and the embodiment shown in Fig. 3, the interlayer 14 having the colored portion 15 is prepared by a conventional method in which a band-shape region (hereinafter, also referred to as "band-shape colored portion") having a colorant incorporated therein, is formed along the upper edge portion, when a thermoplastic resin composition as a raw material for the interlayer for laminated glass for vehicles is formed into a sheet.

In the laminated glass for vehicles of the present invention, a region corresponding to such a band-shape colored portion of the interlayer will be referred to as a colored region. In Fig. 1, the colored region 2 is a region having a width a shown in the upper edge portion. Further as mentioned above, in the colored region 2, the solar transmittance (Te) determined in accordance with JIS 3106 (1998) is preferably at most 50%, more preferably at most 45%, particularly preferably at most 40%. Further, in the heat reflecting region, the solar transmittance (Tts) determined in accordance with ISO 13837 (2008) is preferably at most 60%, more preferably at most 55%, particularly preferably at most 50%.

With respect to the electromagnetic wave transmittance of the laminated glass for vehicles of the present invention, the electromagnetic wave transmission loss of the electromagnetic wave having a frequency of from 300 MHz to 10 GHz is preferably at most 5 dB, more preferably at most 3 dB.

The above optical properties or electromagnetic wave transmission properties in the colored region of the laminated glass for vehicles of the present invention, are mainly due to properties of the colored portion of the interlayer. Further, the visible light transmission properties in the non-colored region of the laminated glass for vehicles explained in the heat reflecting film are due to properties of the non-colored portion of the interlayer, in addition to the properties of the heat reflecting film. The construction to obtain such optical properties will be described below.

With respect to the color degree of the band-shape colored portion, it may be uniform, or gradation may be formed. In the latter case, it is preferred that the color degree is adjusted so that the transmittance gradually increases from the upper end toward the lower end of the interlayer since it is possible to impart the antiglare properties or the heat shielding properties without disturbing visibility of a driver. In such a case, it is preferred that the upper end of the heat reflecting film is present in a region where the color degree is at least one fifteenth of the color degree of the upper end of the colored portion in the interlayer. Further, in the case of the band-shape colored portion to which gradation is formed, the width a means a width from the upper end of the band-shape colored portion to the lower end where the gradation disappears at the lower end thereof.

Further, the boundary between the band-shape colored portion and the region having a high visible light transmittance other than the colored portion, may be blurred so as to be unclear. Specifically, as shown in Fig. 2, 3 or 5, a colored layer having a uniform thickness to a certain position is provided from the upper end toward the center of the laminated glass, and the thickness of the colored layer is gradually reduced from the position toward the center, whereby it is possible to prepare a blur portion.

The size of the band-shape colored portion is preferably at most 50%, more preferably at most 30%, particularly preferably at most 15%, as an area ratio to the entire interlayer. As for the visible light transmittance of the interlayer having a colored portion, the visible light transmittance of a laminated glass when a laminated glass for vehicles is prepared by using the interlayer, is preferably at least 70% in a region where visibility is required in the laminated glass for vehicles, and preferably less than 40% in the band-shape colored portion where antiglare properties and heat shielding properties are required.

The thermoplastic resin to be used in the present invention is not particularly limited so long as the visibility is sufficiently secured when a composition containing the resin as a main component is formed into a sheet and used for a laminated glass for vehicles, and preferably the visible light transmittance is at least 70% when it is formed into a laminated glass. For example, a thermoplastic resin which has been used for an interlayer, such as a plasticized polyvinyl acetal resin, a plasticized polyvinyl chloride resin, a saturated polyester resin, a plasticized saturated polyester resin, a polyurethane resin, a plasticized polyurethane resin, an ethylene-vinyl acetate copolymer resin or an ethylene-ethyl acrylate copolymer resin may be mentioned. Among them, a plasticized polyvinyl acetal resin is suitably used since it is possible to obtain an interlayer excellent in balance of various performances such as excellent transparency, weather resistance, strength, adhesion, penetration resistance, impact energy absorbing property, moisture resistance, heat shielding property and sound insulation property. Such a thermoplastic resin may be used alone or two or more of them may be used in combination. The wording "plasticized" in the plasticized polyvinyl acetal resin means that it is plasticized by adding a plasticizer. The same also applies to other plasticized resins.

The above polyvinyl acetal resin is not particularly limited, and may, for example, be a polyvinyl formal resin obtainable by reacting a polyvinyl alcohol (hereinafter also referred to as "PVA" as the case requires) with formaldehyde, a narrowly-defined polyvinyl acetal resin obtainable by reacting PVA with acetaldehyde or a polyvinyl butyral resin (hereinafter also referred to as "PVB" as the case requires) obtainable by reacting PVA with n-butylaldehyde, and among them, PVB is suitably used since it is possible to obtain an interlayer which is more excellent in balance of various performances such as excellent transparency, weather resistance, strength, adhesion, penetration resistance, impact energy absorbing property, moisture resistance, heat shielding property and sound insulation property. Such a polyvinyl acetal resin may be used alone or two or more of them may be used in combination.

PVA to be used for synthesis of the polyvinyl acetal resin is not particularly limited, but is preferably one having an average polymerization degree of from 200 to 5,000, more preferably from 500 to 3,000. The above polyvinyl acetal resin is not particularly limited, but is preferably one having an acetalization degree of from 40 to 85 mol%, more preferably from 50 to 75 mol%. The polyvinyl acetal resin is preferably one having an amount of the remaining acetyl group of at most 30 mol%, more preferably from 0.5 to 24 mol%.

The plasticizer to be used for plasticizing the thermoplastic resin, preferably a polyvinyl acetal resin, is not particularly limited, but an organic ester type plasticizer such as a monobasic organic ester type or a polybasic organic ester, or a phosphate plasticizer such as an organic phosphate type or an organic phosphorus type may, for example, be mentioned.

The amount of the plasticizer added to the thermoplastic resin, preferably a polyvinyl acetal resin, is not particularly limited since it varies depending upon the average polymerization degree of the thermoplastic resin, or the average polymerization degree, the acetalization degree or the amount of the remaining acetyl group of the polyvinyl acetal resin, but it is preferably from 10 to 80 parts by weight to 100 parts by weight of the thermoplastic resin, preferably the polyvinyl acetal resin. If the amount of the plasticizer to be added, to 100 parts by weight of the thermoplastic resin, preferably a polyvinyl acetal resin, is less than 10 parts by weight, plasticization of the thermoplastic resin, preferably the polyvinyl acetal resin tends to be insufficient, whereby it tends to be difficult to carry out forming (film forming), and on the other hand, if the amount of the plasticizer to be added, to 100 parts by weight of the thermoplastic resin, preferably the polyvinyl acetal resin, exceeds 80 parts by weight, the strength of the interlayer obtainable tends to be insufficient.

The thermoplastic resin composition to be used for preparing an interlayer in the present invention is one containing the above thermoplastic resin, preferably a thermoplastic polyvinyl acetal resin, as a main component, but one or more of various additives such as an adhesion modifier, a coupling agent, a surfactant, an antioxidant, a thermal stabilizer, a light stabilizer, a ultraviolet absorber, an infrared absorber, a fluorescent agent, a dehydrating agent, a defoaming agent, an antistatic agent and a flame retardant may also be contained depending upon various purposes without impairing the effect of the present invention.

In the laminated glass for vehicles of the present invention, the colored portion of the interlayer does not substantially agree with the disposed position of the heat reflecting film, and therefore it is preferred to incorporate an infrared shielding component for the purpose of providing sufficient infrared shielding function to such a portion. As the infrared shielding component, infrared shielding fine particles (hereinafter, simply referred to as "fine particles") are preferably dispersed and blended. An average particle size of the fine particles to be dispersed and blended is preferably at most 0.2 µm, and as a material for the fine particles, it is possible to use a metal such as Re, Hf, Nb, Sn, Ti, Si, Zn, Zr, Fe, Al, Cr, Co, Ce, In, Ni, Ag, Cu, Pt, Mn, Ta, W, V or Mo, an oxide, a nitride, a sulfide or a silicon compound of the above metal, or inorganic fine particles having a dopant such as Sb, F, Sn or Sb doped therewith. Further, it is also possible to use an organic type infrared absorber such as a phthalocyanine type, and these fine particles may be used alone or as a composite. Specifically, antimony (Sb)-doped tin oxide (ATO) fine particles and tin (Sn)-doped indium oxide (ITO) fine particles are preferred.

The colorant used for forming the colored portion of the interlayer in the present invention is not particularly limited so long as it is one which is available for plastics; one which does not lower the electromagnetic wave transmittance, preferably one which can suppress the electromagnetic wave transmission loss of the electromagnetic wave having a frequency of from 300 MHz to 10 GHz to be at most 5 dB when a laminated glass for vehicles is produced; further one which can lower the solar transmittance, preferably one which achieves a solar transmittance (Te) of at most 50%, and/or a solar transmittance (Tts) of at most 60% when a laminated glass for vehicles is produced; and further one which can lower the visible light transmittance, preferably one which achieves a visible light transmittance of less than 40% when a laminated glass for vehicles is produced. For example, an organic pigment or an organic dye including an azo type, a phthalocyanine type, a quinacridone type, a perylene type, a perinone type, a dioxazine type, an anthraquinone type, an isoindolinone type and a coumarin type may be mentioned. Such a colorant may be used alone or at least two of them may be used in combination.

Further, the amount of the colorant to be blended into the thermoplastic resin composition may usually be a blending amount to be used to form the colored portion in the interlayer without any particular restriction, although it depends upon a type or a composition of the thermoplastic resin to be used or a type of the colorant. The blending amount of the colorant is preferably such an amount that the colored portion having the solar transmittance (Te) being at most 50% is formed, and/or the colored portion having the solar transmittance (Tts) being at most 60% is formed, and the colored portion having the visible light transmittance being less than 40% is formed, when a laminated glass is produced. Further, the blending amount of the colorant is preferably such an amount that the colored portion having the electromagnetic wave transmission loss of the electromagnetic wave having a frequency of from 300 MHz to 10 GHz being at most 5 dB is formed, when the laminated glass is produced.

The thickness of the interlayer obtainable in the present invention is not particularly limited, but is preferably from 0.3 to 1.6 mm as in the case of a usual interlayer. If the thickness of the interlayer is less than 0.3 mm, the strength of the interlayer itself tends to be insufficient, and on the other hand, if the thickness of the interlayer exceeds 1.6 mm, a phenomenon such that glass sheets are displaced i.e. a sheet-displacement phenomenon tends to occur in a main bonding (main press-bonding) step by employing an autoclave at the time of preparing the laminated glass as mentioned below.

The method of forming (film forming) an interlayer having the colored portion is not particularly limited, but for example, a non-colored thermoplastic resin composition comprising a thermoplastic resin, preferably a plasticized polyvinyl acetal resin and an optional component, and a colored thermoplastic resin composition obtained by adding a colorant and an optional component to the thermoplastic resin, preferably the plasticized polyvinyl acetal resin, are preliminarily prepared respectively, the above non-colored thermoplastic resin composition and the above colored thermoplastic resin composition are let meet in e.g. a sheet molding die, and both resin compositions are formed (film forming) into a sheet while they are bonded so as to form a color band having a prescribed shape along the upper end, whereby it is possible to obtain a desired interlayer.

Further, a notch is preliminarily provided in the center portion of the sheet formed from the non-colored thermoplastic resin composition, and a thermoplastic resin colored with e.g. a pigment or a dye is co-extruded thereinto, whereby it is possible to form a colored portion. Further, the colored thermoplastic resin composition and the non-colored thermoplastic resin composition are respectively formed into sheets having a prescribed size or a shape, and the sheets are bonded in the plane direction, whereby it is possible to form an interlayer having a colored portion.

Further, in the case of a construction where the heat reflecting film 13 is provided on the surface of the supporting film 16 disposed between the layers of the multilayered interlayer 14 as shown in the cross-sectional view of Fig. 3, the supporting film 16 having the heat reflecting film 13 provided on the surface is disposed in a prescribed position in the multilayered interlayer in the step of bonding the sheet products in preparation of the interlayer, whereby it is possible to form a laminated structure of the multilayered interlayer shown in Fig. 3.

Further, the colored portion is one having its shape, size, color tone or color gradient suitably designed depending upon required performances such as antiglare properties or heat shielding properties, and in accordance with a prescribed design, it is possible to form an interlayer having the colored portion by a known technique.

The interlayer having a colored portion to be used in the present invention is not limited to a single layer structure. For example, in order to obtain an interlayer having a multilayered structure, such as an interlayer in which resin films having different characteristics (different loss-tangent) are laminated for the purpose of improving sound insulation performance as disclosed in JP-A-2000-272936, it is possible to use an interlayer having a multilayered structure.

Further, in order to obtain an interlayer which has a colored portion and also has a wedge-shape cross-section in the vertical direction, for head up displays (HUD) as disclosed in JP-A-2007-223883, an interlayer corresponding to such a shape may be used. In such a case, it is sufficient so long as a desirable wedge-shape cross-section is formed as the entire cross-section shape from the upper edge toward the lower edge of the interlayer, corresponding to the shape of the finally obtainable interlayer. For example, the thickness of the interlayer may monotonously be reduced from the upper edge toward the lower edge. Further, so long as the thickness of the upper edge is larger than the thickness of the lower edge, the thickness may partly be uniform.

Further, in the laminated glass for vehicles of the present invention, at the colored portion of the interlayer, the above electromagnetic transmittance can be secured, but the light transmittance in a wavelength region for a sensor using visible light or infrared ray is not secured. Accordingly, in the interlayer of the laminated glass for vehicles of the present invention, a non-colored portion for mounting such a sensor may be provided on a part of the colored portion by a conventional method, such as a substitution method, without impairing the effect of the present invention.

In such a case, with a view to creating an environment in which various sensors to be used as installed usually in a front glass for automobiles sufficiently operate, the visible light transmittance in the portion corresponding to the non-colored portion prepared by e.g. the above substitution method of the laminated glass for vehicles is preferably at least 40%, particularly preferably at least 50%. From the same viewpoint, the light transmittance at a wavelength of from 850 to 950 nm in the portion corresponding to the above non-colored portion of the laminated glass for vehicles of the present invention is preferably at least 20%, particularly preferably at least 40%.

Fig. 4 is a front view illustrating further another embodiment of the laminated glass for vehicles of the present invention, and Fig. 5 is a cross-sectional view illustrating a portion corresponding to line B-B' in Fig. 4.

In the embodiment of the present invention shown in the cross-sectional view in Fig. 5, the laminated glass for vehicles 10 has the same construction of the laminated glass for vehicles shown in Fig. 1 and Fig. 2 except that a band-shape dark concealment layer 17 having a width smaller than the width of the band-shape colored portion of the interlayer is provided on the peripheral portion of the glass sheet 12 among two glass sheets 11 and 12.

The dark concealment layer 17 in this embodiment is provided on the outer peripheral portion of the glass sheet 12, but it may be provided on the outer peripheral portion of the glass sheet 11. It is preferably provided at the outside (car-interior side) of the glass sheet positioned in the car interior when mounted. In a case where the laminated glass for vehicles has a dark concealment layer, it is preferred that the upper end of the heat reflecting film 13 is located on the lower side by at least 20 mm than the lower end of the dark concealment layer provided on the upper edge portion.

In a case where the lower end of the dark concealment layer is not linear, for example, in a case where the lower end protrudes, the lower end of the dark concealment layer means a line which does not protrude.

As the dark concealment layer 17, usually, a dark concealment layer to be used for a laminated glass for vehicles is used without any particular restriction. The dark concealment layer is usually a layer subjected to treatment to make it at least visually opaque, and such treatment is not particularly limited. Further, in the laminated glass for vehicles of the present invention, the width of the band-shape dark concealment layer may usually be approximately from 10 to 200 mm, as in the case of the width (a width represented as d in Fig. 5) of the dark concealment layer to be used in the laminated glass for vehicles. The dark concealment layer is obtainable by e.g. coloring so that the color becomes light toward the center of the glass, or by means of halftone treatment employing a dark concealment material, that is by dividing the dark concealment layer so that dots gradually become small toward a visible surface by a known method. The dark concealment layer is provided so as to surround a peripheral portion of the glass sheet, but it is also possible to provide it on another region, as the case requires.

The dark concealment layer is formed from a material, such as a colored ceramic baking coating material, containing no metal component, a pigment component or the like which prevents electromagnetic transmission performance, and the dark concealment layer may be prepared by a usual production process employing such a colored ceramic baking coating material, specifically e.g. screen printing of the ceramic baking coating material, by baking the coating material at the same time during e.g. a step of bending a glass.

The laminated glass for vehicles of the present invention is applied to vehicles such as automobiles, trains, ships etc., and it is particularly preferably applied to automobiles.

As for the solar transmittance of the laminated glass for vehicles of the present invention, in the colored region corresponding to the colored portion of the interlayer and the heat reflecting region provided with the above heat reflecting film in the laminated glass, the solar transmittance (Te) determined in accordance with JIS R3106 (1998) is preferably at most 50%, and the solar transmittance (Tts) determined in accordance with ISO 13837 (2008) is preferably at most 60%. When the solar transmittance is within the above range in the colored region corresponding to the colored portion of the interlayer and the heat reflecting region provided with the heat reflecting film in the laminated glass for vehicles of the present invention, it is considered that sufficient heat shielding property is achieved.

The visible light transmittance of the laminated glass for vehicles of the present invention is preferably at least 70% in the non-colored region other than the colored region corresponding to the colored portion of the interlayer, since visibility is required, and it is preferably less than 40% in the colored region, since the antiglare property or the heat shielding property is required.

Such properties in the portions corresponding to the colored portion and the non-colored portion of the interlayer and the heat reflecting region, of the laminated glass for vehicles, are achieved by performances of three components of the interlayer, the heat reflecting film and the glass sheets to be used for the laminated glass for vehicles of the present invention, and in the present invention, an interlayer is produced on the presumption of the combination of the above commonly used glass sheets in a conventional technical scope and a production process of the laminated glass. Accordingly, e.g. a glass sheet and a process for producing a laminated glass as mentioned below are ones which are commonly used.

The glass sheet to be used for the laminated glass for vehicles of the present invention, includes not only a usual inorganic transparent glass sheet, but also an organic transparent glass sheet such as a polycarbonate sheet or a polymethyl methacrylate sheet.

The type of the glass sheet is not particularly limited so long as it is a glass sheet which may be used for vehicles, but it is preferred to use a float sheet glass formed by means of a float process. A clear glass sheet having no coloring component added thereto may be employed, or a colored glass sheet or a colored organic glass sheet may, for example, be used without impairing the effect of the present invention. Further, one or at least two of them may be used in combination. Further, the thickness of the glass sheet may suitably be selected, but is usually approximately from 1.8 to 2.5 mm. Further, coating to impart water repellency, hydrophilicity, an antifogging function or the like may be applied to the glass sheet.

In the construction where a heat reflecting film is laminated on a glass sheet as in the embodiment of the laminated glass for vehicles of the present invention shown in Figs. 1 and 2, in advance of the following step of bonding a glass sheet by an interlayer, a glass sheet as a substrate is used as described in the above production process of the heat reflecting film, and the heat reflecting film is formed on the necessary surface.

The production process of the laminated glass for vehicles of the present invention may not be a special method, and it may be the same production process as in the case of a usual laminated glass. That is, for example, in a case where a heat reflecting film formed on the surface of a glass sheet is disposed between two transparent glass sheets, the above interlayer is sandwiched so that the surface having the heat reflecting film would be inside, this laminated glass constituent is put in a vacuum bag such as a rubber bag, this vacuum bag is connected to an evacuation system, and while the vacuum bag is evacuated of air under reduced pressure (deaerated) so that the pressure in the vacuum bag would be a vacuum degree of from about -65 to -100 kPa (absolute pressure of from about 36 to 1 kPa), the preliminary bonding (preliminary press bonding) is carried out at a temperature of from about 70 to 110°C, thereafter such a laminated glass constituent thus preliminarily bonded is put in an autoclave, then heated at a temperature of from about 120 to 150°C and pressurized under a pressure of from about 0.98 to 1.47 MPa to carry out main bonding (main press bonding), whereby it is possible to obtain a desirable laminated glass for vehicles.

The laminated glass for vehicles of the present invention has not only durability and economic efficiency, but also electromagnetic transmittance which makes it possible to install various communication means by letting electromagnetic wave transmit through the upper edge portion, since the portion having the heat reflecting film disposed is not present in the upper edge portion of the laminated glass.

With respect to the electromagnetic transmittance in the non-heat reflecting region of the laminated glass for vehicles of the present invention, it is preferred that the electromagnetic wave transmission loss of the electromagnetic wave having a frequency of from 300 MHz to 10 GHz to be used in various communication equipment in the laminated glass is at most 5 dB.

Further, the laminated glass for vehicles of the present invention also has excellent heat shielding properties over the entire surface since the colored portion of the interlayer and the portion having the heat reflecting film disposed are arranged with substantially no gaps. Further, by such a constituent, safety and good appearance are achieved while the boundary formed by disposing the heat reflecting film would not be noticeable. It is possible to further increase the heat shielding properties by incorporating an infrared shielding component such as ITO fine particles to the colored portion of the interlayer.

In the laminated glass for vehicles of the present invention, in a case where the interlayer is a multilayered interlayer containing a supporting film provided with a heat reflecting film, as laminated, occurrence of wrinkles on the supporting film in the laminated glass can be suppressed by providing the non-heat reflecting region in the upper edge portion, whereby excellent shape following ability can be achieved.

### EXAMPLES

Now, the present invention will be described with reference to Examples, but it should be understood that the present invention is by no means restricted to such specific Examples.

### EXAMPLE 1 (Case 1 where a heat reflecting film is provided on glass)

On a 2 mm-thick colorless transparent soda lime silica glass (manufactured by Asahi Glass Company, Limited) with 300 mm × 300 mm, a heat reflecting film having two silver (Ag) layers applicable to heat-treatment, was formed by means of magnetron sputtering. Constituent materials, film thickness and composition of each layer of the multilayered heat reflecting film are shown in Table 1.

Further, at the time of forming the heat reflecting film, a 300 mm × 110 mm band-shape masking was applied along one side (a side to be "upper edge" in the after-mentioned laminated glass) of the glass. That is, a 300 mm × 110 mm band-shape mask made of metal was prepared, and the 300 mm × 110 mm band-shape mask was placed along one side of the glass. Therefore, no heat reflecting film is formed on the portion having the mask placed.

**TABLE 1**

| Layer | Layer constituting material | Film thickness | Atomic ratio |
|---|---|---|---|
| Dielectric layer | AIN | 6.0 nm | |
| | ZnAlOₓ | 25.0 nm | Al/Zn = 0.1 |
| Lower barrier layer | ZnAlO_{y} | 1.0 nm | Al/Zn = 0.1 |
| Heat reflecting layer | Ag | 10.0 nm | |
| Upper barrier layer | ZnAlO_{y} | 1.2 nm | Al/Zn = 0.1 |
| Dielectric layer | ZnAlOₓ | 75.0 nm | Al/Zn = 0.1 |
| Lower barrier layer | ZnAlO_{y} | 0.7 nm | Al/Zn = 0.1 |
| Heat reflecting layer | Ag | 10.0 nm | |
| Upper barrier layer | ZnAlO_{y} | 1.7 nm | Al/Zn = 0.1 |
| Dielectric layer | ZnAlOₓ | 18.5 nm | Al/Zn = 0.1 |
| | AIN | 8.5 nm | |

ZnAlOₓ in Table 1 is a mixed oxide containing Zn and Al, formed by means of a reflective DC magnetron sputtering in the presence of oxygen, by employing a target of an alloy or a mixture of Zn and Al. A ZnAlO_{y} barrier layer was formed by means of a DC magnetron sputtering by employing a target of an alloy or a mixture of Zn and Al in an argon atmosphere.

An AIN layer was formed by means of a reactive DC magnetron sputtering in an atmosphere of mixed gas of nitrogen and argon, by employing a 6061 alloy target. An Ag layer was formed by a DC magnetron sputtering in an argon atmosphere, by employing an Ag target.

The above obtained glass provided with a heat reflecting film was subjected to heat treatment at 645°C for 14 minutes. After the heat treatment, a coating film having constituents shown in Table 2 was obtained as a heat reflecting film.

Each upper barrier layer itself is oxidized at the time of forming a ZnAlOₓ oxide layer by a DC magnetron sputtering on the barrier layer, and at the time of heat treatment of the glass sheet after forming the heat reflecting film, whereby oxidation of an Ag layer under the barrier layer is prevented. Further, each lower barrier layer itself is oxidized at the time of heat treatment of the glass sheet after forming the heat reflecting film, whereby oxidation of an Ag layer on the barrier layer is prevented.

The heat reflecting film was formed as such, and then the mask placed along one side of the above glass was removed.

**TABLE 2**

| Layer | Layer constituting material | Film thickness | Atomic ratio |
|---|---|---|---|
| Dielectric layer | AlN | 6.0 nm | |
| | ZnAlOₓ | 26.3 nm | Al/Zn = 0.1 |
| Heat reflecting layer | Ag | 10.0 nm | |
| Dielectric layer | ZnAlOₓ | 77.8 nm | Al/Zn = 0.1 |
| Heat reflecting layer | Ag | 10.0 nm | |
| Dielectric layer | ZnAlOₓ | 20.8 nm | Al/Zn = 0.1 |
| | AlN | 8.5 nm | |

The above obtained glass provided with a heat reflecting film and a 2 mm-thick green-type soda lime silica glass (manufactured by Asahi Glass Company, Limited) with 300 mm × 300 mm were bonded so as to seal the heat reflecting film, via a 0.76 mm-thick interlayer provided with a light blue colored portion (trade name: S-LEC, manufactured by Sekisui Chemical Co., Ltd.) with 300 mm × 300 mm, by means of the above-mentioned known method, so as to have the same cross-section as in the above Fig. 2, whereby a test specimen of a laminated glass for vehicles (hereinafter, simply referred to as "a laminated glass for vehicles") was produced. Here, the edge corresponding to the side A of Fig. 2 is regarded as an upper edge of the laminated glass for vehicles.

The interlayer provided with a light blue colored portion has a band-shape colored portion with 300 mm × 170 mm along one edge to be the upper edge of the interlayer (hereinafter, simply referred to as "upper edge") when a laminated glass for vehicles was formed, and the color degree of the colored portion to 110 mm from the upper edge is constant, but the color degree gradually reduces in a portion from 110 mm to 170 mm from the upper edge. Further, in the laminated glass for vehicles, the upper end of the heat reflecting film is located at 110 mm from the upper edge, and the heat reflecting film is disposed over the entire surface except the upper edge portion to 110 mm from the upper edge, that is, the heat reflecting film is disposed within a range between the position of 110 mm from the upper edge and the lower edge. In the above laminated glass for vehicles, the colored region corresponding to the colored portion of the interlayer and the heat reflecting region provided with the heat reflecting film overlap with an area of 300 mm × 60 mm, in a range from 110 mm to 170 mm from the upper edge.

With respect to the laminated glass for vehicles thus obtained, with respect to light entered from outside of the glass substrate having a heat reflecting film formed inside thereof, the transmittance and the reflectance at a wavelength of from 300 to 2,500 nm were measured by using a spectrophotometer (manufactured by Hitachi High-Technologies Corporation, U-4000), and the visible light transmittance Tv (%) was determined in accordance with JIS R3211, the solar transmittance Te (%) and the solar reflectance Re (%) were determined in accordance with JIS R3106, and the solar transmittance (Tts) was determined in accordance with ISO 13837 (2008). Further, such optical properties were measured at thirteen points of 5 mm, 30 mm, 70 mm, 80 mm, every 10 mm from 100 mm to 170 mm, and 200 mm respectively, in order from the upper edge (an edge having a colored region provided along the edge) toward the lower edge of the laminated glass for vehicles. The results are shown in Fig. 6.

In the above obtained laminated glass for vehicles, one end portion (upper end) of a heat reflecting film was disposed on the colored portion side by 60 mm from the end portion of the colored portion, and therefore the end portion of the heat reflecting film was not noticeable. Further, in the entire region of the laminated glass, Te was at most 40%, and Tts was at most about 50%.

In the same manner as the above except that the shape and the size of the glass are full-scale, that is, a 2 mm-thick colorless transparent soda lime silica glass having a heat reflecting film formed thereon except a region having a width of 110 mm (width x in Fig. 2) along the upper edge of the glass, and a 2 mm-thick green type soda lime silica glass, were laminated via the above-mentioned interlayer having a color band (width a in Fig. 2) with a band shape of 170 mm at the upper end, thereafter the laminate was preliminarily bonded and then mainly bonded to produce a full-scale laminated glass for vehicles. The resulting laminated glass for vehicles was mounted in an actual car, an electromagnetic wave having a frequency of from 300 MHz to 10 GHz was applied from the front of the car, the received intensity was measured by a car-interior receiver, and as a result, an electromagnetic wave transmission loss as compared with a case where the same laminated glass for vehicles except that no heat reflecting film was provided was mounted, was found to be at most 5 dB, and therefore the electromagnetic wave transmittance was good.

### EXAMPLE 2 (Case 2 where a heat reflecting film is provided on glass)

In the same manner as in Example 1, a heat reflecting film was provided on a 2 mm-thick colorless transparent soda lime silica glass (manufactured by Asahi Glass Company, Limited) with 300 mm × 300 mm. By using such a glass provided with the heat reflecting film, a test specimen of a laminated glass for vehicles (hereinafter, simply referred to as "a laminated glass for vehicles") was prepared in the same manner as in Example 1, except for using an interlayer having ITO added to the colored portion, which was prepared as follows.

### <Production Example of an interlayer having ITO added to a colored portion>

A plasticizer dispersion having 0.28 part by weight of tin-doped indium oxide (ITO) fine particles and 0.014 part by weight of trioctyl phosphate dispersed in 10 parts by weight of triethylene glycol-di-ethyl hexanoate (3GO), to 100 parts by weight of a polyvinyl butyral resin, was prepared, and 29 parts by weight of triethylene glycol-di-ethyl hexanoate (3GO) and 0.70 part by weight of a coloring toner (a red toner, a black toner or a blue toner) prepared separately were added to the plasticizer dispersion, followed by mixing them by employing a three roll mill. The resulting mixture was used as a colored thermoplastic resin composition, and heat-pressed together with a non-colored thermoplastic resin composition, thereby to obtain a 0.76 mm polyvinyl butyral resin sheet having the same construction as the interlayer used in the above Example 1 except that a colored portion had ITO.

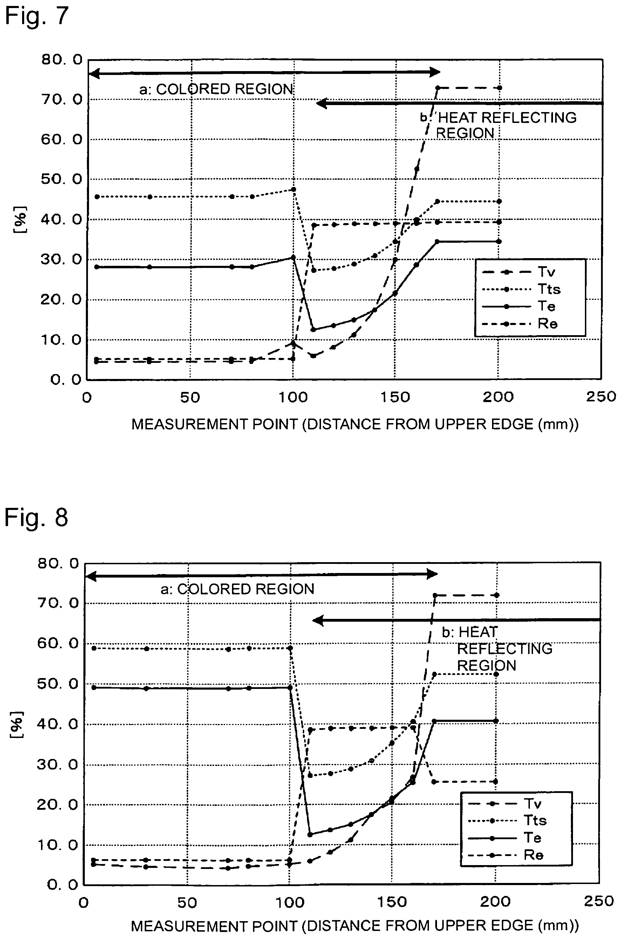

With respect to the laminated glass for vehicles thus obtained, the optical properties were measured at thirteen points from the upper edge toward the lower edge of the laminated glass, and the visible light transmittance Tv (%), the solar transmittance Te (%), the solar reflectance Re (%) and the solar transmittance (Tts) were determined at the respective measurement points, in the same manner as in Example 1. The results are shown in Fig. 7.

In the above obtained laminated glass for vehicles, one end portion (upper end) of a heat reflecting film was disposed on the colored portion side by 60 mm from the end portion of the colored portion, and therefore the end portion of the heat reflecting film was not noticeable. Further, in the entire region of the laminated glass, Te was at most 30%, and Tts was at most 50%. A full-scale laminated glass for vehicles having a construction of this embodiment was produced in the same manner as in Example 1, the electromagnetic wave transmission was measured, and as a result, the electromagnetic wave transmission loss was at most 5 dB, and the electromagnetic wave transmittance was good.

EXAMPLE 3 (Case where a film provided with a heat reflecting film is sealed into an interlayer)

Between a 0.76 mm-thick interlayer with 300 mm × 300 mm provided with a colored portion (trade name: S-lec, manufactured by Sekisui Chemical Co., Ltd.) (hereinafter referred to as "a film A") having a colored portion (the upper edge portion in the laminated glass for vehicles) with 300 mm × 170 mm and a non-colored portion with 300 mm × 130 mm, and a 0.38 mm-thick non-colored interlayer (trade name: Saflex AR11, manufactured by Solutia Japan Limited) (hereinafter referred to as "a film B") with 300 mm × 300 mm, a 0.05 mm-thick heat reflecting film (trade name: XIR-70, manufactured by Southwall Technologies, Inc.) with 300 mm × 190 mm was positioned so that an upper end thereof was located on the lower side by 110 mm than the upper edge of the interlayer as the upper edge when the laminated glass for vehicles was prepared, whereby the heat reflecting film and the colored portion were overlapped at each region with 300 mm × 60 mm, thereby to obtain an interlayer for a laminated glass for vehicles with 300 mm × 300 mm, having the same cross-sectional construction as the interlayer 14 in the above Fig. 3.

Two sheets of 2 mm-thick colorless transparent soda lime silica glass (manufactured by Asahi Glass Company, Limited) with 300 mm × 300 mm were bonded via the interlayer for a laminated glass for vehicles, whereby a test specimen of laminated glass for vehicles (hereinafter, simply referred to as "a laminated glass for vehicles") was prepared. As a method for bonding the two sheets of glass via the interlayer, the above-mentioned known method was employed. The resulting laminated glass for vehicles is one having the same cross-sectional construction as the laminated glass for vehicles shown in Fig. 3, and a side having a colored region corresponding to the colored portion of the interlayer is regarded as the upper edge.

With respect to the laminated glass for vehicles thus obtained, in the same manner as in Example 1, the optical properties were measured at thirteen points from the upper edge toward the lower edge of the laminated glass, and the visible light transmittance Tv (%), the solar transmittance Te (%), the solar transmittance Re (%) and the solar transmittance (Tts) at the respective measurement points were obtained. The results are shown in Fig. 8.

In the above obtained laminated glass for vehicles, one end portion (upper end) of a heat reflecting film was disposed on the colored portion side by 60 mm from the end portion of the colored portion, and therefore the end portion of the heat reflecting film was not noticeable. Further, in the entire region of the laminated glass, Te was at most 50%, and Tts was at most 60%. Further, a full-scale laminated glass for vehicles having the constitution in this Example was produced, and the electromagnetic wave transmittance was measured, in the same manner as in Example 1, and as a result, the electromagnetic wave transmission loss was at most 5 dB, whereby the electromagnetic transparency was found to be good.

The laminated glass for vehicles of the present invention has electromagnetic wave transmittance which makes it possible to install various sensors or communication equipments employing electromagnetic waves, and also has excellent heat shielding property over the entire surface of a glass surface, safety, durability and economic efficiency. Accordingly, it is applied to vehicles such as automobiles, railroads or shipping, and especially it is preferably applied to automobiles.

Cited is Japanese Patent Application No. 2009-187518 filed on August 12, 2009 including specification, claims, drawings and summary.

### REFERENCE SYMBOLS

1: Non-colored region
2: Colored region
3: Dark concealment region
10: Laminated glass for vehicles
11, 12: Glass sheet
13: Heat reflecting film
14: Interlayer
15: Colored portion
16: Supporting film
17: Dark concealment layer

## Claims

1. A laminated glass for vehicles comprising at least two glass sheets, and an interlayer and a heat reflecting film having a layer made of silver as a main component, provided between the two glass sheets, which are laminated, wherein
the interlayer is provided over the entire surface of the laminated glass, and has a band-shape colored portion along the upper edge portion of the laminated glass, wherein the colored portion is formed by blending a colorant into a thermoplastic resin composition forming the colored portion in the interlayer, and
the heat reflecting film is positioned so that an upper end thereof is located above the vicinity of a lower end of the colored portion of the interlayer and at least 50 mm below the upper end of the laminated glass, and said heat reflecting film is provided over substantially the entire surface of the laminated glass except a part or all of the upper edge portion of the laminated glass.

2. The laminated glass for vehicles according to Claim 1, wherein the colored portion of the interlayer contains an infrared shielding component.

3. The laminated glass for vehicles according to Claim 1 or 2, wherein the heat reflecting film is positioned so that the upper end thereof is located at least 10 mm above the lower end of the colored portion of the interlayer and at least 100 mm below the upper edge of the laminated glass.

4. The laminated glass for vehicles according to any one of Claims 1 to 3, wherein the heat reflecting film is provided on the surface of at least one of the glass sheets, located inside of the laminated glass, or the interlayer is a multilayered interlayer containing a supporting film as laminated, wherein the heat reflecting film is provided on the surface of the supporting film.

5. The laminated glass for vehicles according to any one of Claims 1 to 4, wherein the solar transmittance (Te) determined in accordance with JIS R3106 (1998) is at most 50% in a colored region corresponding to the colored portion of the interlayer and in a heat reflecting region provided with the heat reflecting film in the laminated glass.

6. The laminated glass for vehicles according to any one of Claims 1 to 5, wherein the solar transmittance (Tts) determined in accordance with ISO 13837 (2008) is at most 60% in a colored region corresponding to the colored portion of the interlayer and in a heat reflecting region provided with the heat reflecting film in the laminated glass.

7. The laminated glass for vehicles according to any one of Claims 1 to 6, wherein the electromagnetic wave transmission loss of the electromagnetic wave having a frequency of from 300 MHz to 10 GHz is at most 5 dB, in a non-heat reflecting region of the laminated glass.

8. The laminated glass for vehicles according to any one of Claims 1 to 7, wherein the color degree at the colored portion of the interlayer gradually reduces from the upper end toward the lower end of the colored portion.

9. The laminated glass for vehicles according to any one of Claims 1 to 8, wherein at least one of the glass sheets has a band-shape dark concealment layer having a width smaller than the width of the band-shape colored portion of the interlayer on the peripheral portion containing at least the upper edge portion, and the upper end of the heat reflecting film is positioned so as to be at least 20 mm below the lower end of the dark concealment layer provided at the upper edge portion.

## Patentansprüche

1. Laminiertes Glas für Fahrzeuge, umfassend mindestens zwei Glasplatten, und eine Zwischenschicht und einen wärmereflektierenden Film mit einer Schicht, hergestellt aus Silber als einen Hauptbestandteil, angeordnet zwischen den zwei Glasplatten, welche laminiert sind, wobei
die Zwischenschicht auf der gesamten Oberfläche des laminierten Glases angeordnet ist und einen bandförmigen farbigen Bereich entlang des oberen Kantenbereichs des laminierten Glases aufweist, wobei der farbige Bereich durch Zumischen eines Färbemittels in eine thermoplastische Harzzusammensetzung, welche den farbigen Bereich in der Zwischenschicht bildet, gebildet wird, und
der wärmereflektierende Film derart angeordnet ist, dass ein oberes Ende davon oberhalb der Umgebung eines unteren Endes des farbigen Bereichs der Zwischenschicht und mindestens 50 mm unterhalb des oberen Endes des laminierten Glases befindet, und der wärmereflektierende Film im Wesentlichen auf der ganzen Oberfläche des laminierten Glases, abgesehen von einem Teil oder dem Ganzen des oberen Kantenbereichs des laminierten Glases, angeordnet ist.

2. Laminiertes Glas für Fahrzeuge nach Anspruch 1, wobei der farbige Bereich der Zwischenschicht einen Infrarot-abschirmenden Bestandteil enthält.

3. Laminiertes Glas für Fahrzeuge nach Anspruch 1 oder 2, wobei der wärmereflektierende Film derart angeordnet ist, dass dessen oberes Ende mindestens 10 mm oberhalb des unteren Endes des farbigen Bereichs der Zwischenschicht und mindestens 100 mm unterhalb der oberen Kante des laminierten Glases angeordnet ist.

4. Laminiertes Glas für Fahrzeuge nach einem der Ansprüche 1 bis 3, wobei der wärmereflektierende Film auf der Oberfläche von mindestens einer der Glasplatten angeordnet und innerhalb des laminierten Glases angeordnet ist, oder die Zwischenschicht eine Zwischenschicht mit mehreren Schichten, enthaltend einen Trägerfilm wie laminiert, ist, wobei der wärmereflektierende Film auf der Oberfläche des Trägerfilms angeordnet ist.

5. Laminiertes Glas für Fahrzeuge nach einem der Ansprüche 1 bis 4, wobei die Solartransmission (Te), bestimmt gemäß JIS R3106 (1998), höchstens 50% in einem farbigen Bereich, welcher dem farbigen Bereich der Zwischenschicht entspricht, und in einem wärmereflektierenden Bereich, bereitgestellt mit dem wärmereflektierenden Film in dem laminierten Glas, beträgt.

6. Laminiertes Glas für Fahrzeuge nach einem der Ansprüche 1 bis 5, wobei die Solartransmission (Tts), bestimmt gemäß ISO 13837 (2008), höchstens 60% in einem gefärbten Bereich, welcher dem farbigen Bereich der Zwischenschicht entspricht, und in einem wärmereflektierenden Bereich, bereitgestellt mit dem wärmereflektierenden Film in dem laminierten Glas, beträgt.

7. Laminiertes Glas für Fahrzeuge nach einem der Ansprüche 1 bis 6, wobei der elektromagnetische-Wellen-Transmissionsverlust einer elektromagnetischen Welle mit einer Frequenz von 300 MHz bis 10 GHz höchstens 5 dB in einem nicht-wärmereflektierenden Bereich des laminierten Glases beträgt.

8. Laminiertes Glas für Fahrzeuge nach einem der Ansprüche 1 bis 7, wobei der Färbungsgrad im farbigen Bereich der Zwischenschicht vom oberen Ende zum unteren Ende des farbigen Bereichs graduell abnimmt.

9. Laminiertes Glas für Fahrzeuge nach einem der Ansprüche 1 bis 8, wobei mindestens eine der Glasplatten eine bandförmige dunkle Kaschierschicht mit einer kleineren Breite als die Breite des bandförmigen farbigen Bereichs der Zwischenschicht im peripheren Bereich, enthaltend mindestens den oberen Kantenbereich, aufweist und das obere Ende des wärmereflektierenden Films derart angeordnet ist, dass er sich mindestens 20 mm unterhalb des unteren Endes der dunklen Kaschierschicht, angeordnet im oberen Kantenbereich, befindet.

## Revendications

1. Verre feuilleté pour véhicules comprenant au moins deux feuilles de verre, et une couche intermédiaire et un film réfléchissant la chaleur comportant une couche faite d'argent en tant que composant principal, disposé entre les deux feuilles de verre, qui sont stratifiés, dans lequel
la couche intermédiaire est disposée sur toute la surface du verre feuilleté, et comporte une partie colorée en forme de bande le long de la partie de bord supérieure du verre feuilleté, la partie colorée étant formée par mélange d'un colorant dans une composition de résine thermoplastique formant la partie colorée dans la couche intermédiaire, et
le film réfléchissant la chaleur est positionné de sorte qu'une extrémité supérieure de celui-ci soit situé au-dessus du voisinage d'une extrémité inférieure de la partie colorée de la couche intermédiaire et au moins 50 mm sous l'extrémité supérieure du verre feuilleté, ledit film réfléchissant la chaleur étant disposé sur pratiquement toute la surface du verre feuilleté à l'exception d'une partie ou de la totalité de la partie de bord supérieure du verre feuilleté.

2. Verre feuilleté pour véhicules selon la revendication 1, dans lequel la partie colorée de la couche intermédiaire contient un composant faisant écran aux infrarouges.

3. Verre feuilleté pour véhicules selon la revendication 1 ou 2, dans lequel le film réfléchissant la chaleur est positionné de sorte que l'extrémité supérieure de celui-ci soit situé au moins 10 mm au-dessus de l'extrémité inférieure de la partie colorée de la couche intermédiaire et au moins 100 mm sous le bord supérieur du verre feuilleté.

4. Verre feuilleté pour véhicules selon l'une quelconque des revendications 1 à 3, dans lequel le film réfléchissant la chaleur est disposé sur la surface d'au moins l'une des feuilles de verre, se trouvant à l'intérieur du verre feuilleté, ou bien la couche intermédiaire est une couche intermédiaire multicouche contenant un film de support sous forme stratifiée, le film réfléchissant la chaleur étant disposé sur la surface du film de support.

5. Verre feuilleté pour véhicules selon l'une quelconque des revendications 1 à 4, dans lequel le coefficient de transmission de la lumière solaire (Te), déterminé conformément à la norme JIS R3106 (1998), est d'au plus 50 % dans une région colorée correspondant à la partie colorée de la couche intermédiaire et dans une région réfléchissant la chaleur dotée du film réfléchissant la chaleur dans le verre feuilleté.

6. Verre feuilleté pour véhicules selon l'une quelconque des revendications 1 à 5, dans lequel le coefficient de transmission de la lumière solaire (Tts), déterminé conformément à la norme ISO 13837 (2008), est d'au plus 60 % dans une région colorée correspondant à la partie colorée de la couche intermédiaire et dans une région réfléchissant la chaleur dotée du film réfléchissant la chaleur dans le verre feuilleté.

7. Verre feuilleté pour véhicules selon l'une quelconque des revendications 1 à 6, dans lequel la perte de transmission d'onde électromagnétique d'une onde électromagnétique présentant une fréquence de 300 MHz à 10 GHz est d'au plus 5 dB, dans une région ne réfléchissant pas la chaleur du verre feuilleté.

8. Verre feuilleté pour véhicules selon l'une quelconque des revendications 1 à 7, dans lequel le degré de couleur au niveau de la partie colorée de la couche intermédiaire diminue progressivement depuis l'extrémité supérieure en direction de l'extrémité inférieure de la partie colorée.

9. Verre feuilleté pour véhicules selon l'une quelconque des revendications 1 à 8, dans lequel au moins l'une des feuilles de verre comporte une couche d'occultation sombre en forme de bande présentant une largeur inférieure à la largeur de la partie colorée en forme de bande de la couche intermédiaire sur la partie périphérique contenant au moins la partie de bord supérieure, et l'extrémité supérieure du film réfléchissant la chaleur est positionnée de façon à être au moins 20 mm sous l'extrémité inférieure de la couche d'occultation sombre disposée au niveau de la partie de bord supérieure.
